# EUROPEAN PATENT SPECIFICATION

(11) **EP 2 253 526 B1**
(45) Date of publication and mention of the grant of the patent: **30.10.2013**
(21) Application number: 10152442.9
(22) Date of filing: 02.02.2010
(51) Int. Cl.: B62B 1/20, B62B 1/00, B62B 5/08

(54) **Wheelbarrow system**
Schubkarrensystem
Système de brouette

(30) Priority: 18.05.2009 GB 0908465; 06.01.2010 GB 201000133
(43) Date of publication of application: 24.11.2010
(73) Proprietor: Tyler, Richard Nigel, Thorpe St Andrew Norwich Norfolk NR7 0XU (GB)
(72) Inventor: Tyler, Richard Nigel, Thorpe St Andrew Norwich Norfolk NR7 0XU (GB)
(74) Representative: ip21 Ltd

(56) References cited:
- EP-A2- 0 317 044
- FR-A1- 2 366 972
- GB-A- 2 324 070
- GB-A- 2 415 166
- US-A- 6 109 644

## Description

### Field of the invention

This invention relates to wheelbarrow systems, and in particular, to modular wheelbarrow systems. Specifically, the invention relates to wheelbarrows of the type used to transport relatively heavy loads of fishing tackle.

### Background to the invention and problems to be solved

There is a wide variety of wheelbarrows available, some of which can be adapted to carry fishing tackle. Some purpose built tackle barrows do exist, but they tend to be only part adapted from conventional barrows, having a rudimentary framework, which goes only part of the way in fulfilling the requirements of the serious angler.

One problem is that wheelbarrows designed for anglers tend to be bulky and heavy.

Another problem is that the loads to which a wheelbarrow designed to carry fishing tackle is subjected can vary within wide limits, dependent on the type and amount of fishing tackle being transported and the weight of the bait and ground bait.

Normally wheelbarrows designed to move fishing tackle have a chassis, with one or two wheels, that is clamped in a fixed position on a horizontal platform. It is often impossible to change the point of balance and the size. This design is not best suited to moving loads of different sizes, or the situation where a part of the barrow is more heavily loaded than the rest of the barrow.

One of the most difficult items of fishing tackle to transport is the angler's large ground bait bucket. This is normally loaded with between 1 kg and 10kg of ground bait. Balancing this item and fixing it in place is very difficult with the standard horizontal platform wheelbarrow with a chassis that is in a fixed position.

One objective of the current invention is to convert an angler's seat box into a wheelbarrow system with a moveable point of balance and a height adjustable hoop that fixes an angler's ground bait bucket in place to create a counterbalance.

It is amongst the objects of the invention to provide solutions to these and other problems.

The following citations are understood to form the prior art:
US4762333A MORTENSON
US4244595A SAG E RT
US4114916A OYAMA
US3063730A DOMORADZKI
JP2003011826A AMAO
JP07223542A ONODERA

In addition, closest prior art has been found in US patent 6109644 (COX), which comprises a utility wagon with a main beam and a removable handle, a removable tail member, first and second wheels, and two cross members. The cross members are provided with uprights which may be adjusted to accommodate various sizes of basket and carriers. Although the width of the wheel base can be varied, and the wheels can be removed, COX lacks an adjustably located pivot point.

A second document of relevance is UK patent application GB2324070A SILVERSTEIN, which features a trolley comprising at least one wheel, handle means for propelling the trolley and a flat load platform bounded on at least one side by a restraint or barrier which is adjustable to vary the area of the platform. The platform has barriers on three or four sides of the platform, and those barriers may be locked in a variety of positions laterally spaced from the platform. In this document, the position of the wheel and its mounting is fixed relative to the rest of the trolley, and as such the pivot point cannot be altered.

### Summary of the invention

In a first broad, independent aspect, the invention according to claim 1 comprises a wheelbarrow system comprising a frame and a chassis, said chassis comprising at least one wheel and an axle, wherein said wheel and said axle provide a pivot point for said wheelbarrow system, wherein the wheelbarrow system further comprises means for forming a slidable connection with said frame, and within which said connection the chassis may be collocated relative to said frame in a plurality of positions, and further may be removed from said collocation, and characterised in that the wheel is detachably mounted on the chassis, by way of a wheel assembly, said wheel assembly being separate to both frame and chassis, thereby allowing the independent adjustment of the position of the wheel in relation to both chassis and frame, thereby allowing the position of the pivot point to be likewise adjusted.

The slidable connection, allowing as it does the relative movement of the frame and the chassis is advantageous in that the pivot point of the wheelbarrow system may be moved, making it easier for the user to push or pull the wheelbarrow system. Factors which may govern this adjustment may include the strength of the user and the relative distribution of weight on different parts of the wheelbarrow system.

That the chassis may be removed from collocation with the frame is of further advantage in that it increases the stability of the frame, and allows the frame to be positioned closer to a river bank, whereby it may fulfil its secondary function of providing a seat for an angler / user.

In a first subsidiary aspect, the chassis further comprises a counterbalance.

The provision of counterbalance means allows for the easier pivoting of the wheelbarrow system about the chassis. This provides a dear advantage over more conventional wheelbarrow systems of the prior art.

In a second subsidiary aspect, said counterbalance is, in use, vertically adjustable.

The provision of a vertically adjustable counterbalance allows the user to adjust it relative to his height and provides the further advantage of allowing the centre of gravity of the wheelbarrow system to be changed.

In a third subsidiary aspect, the counterbalance comprises tackle bucket receiving means and / or a tackle bucket.

That the counterbalance comprises a tackle bucket or means to receive it, is advantageous in that it puts to good use the burden that must necessarily be carried by the wheelbarrow system. The advantage of a height adjustable tackle bucket is that if the bucket is heavy, the receiving means can be lowered to ensure the base of the bucket is supported by the chassis.

In a fourth subsidiary aspect, the slidable connection comprises releasable locking means.

Releasable locking means allow for the relative positions of the frame and chassis to be set, or changed in accord with the user's wishes.

In a fifth subsidiary aspect, the slidable connection comprises a releasable ratchet mechanism.

A releasable ratchet mechanism allows for the quick setting of said relative positions of frame and chassis.

In a sixth subsidiary aspect, the slidable connection comprises one or more rails.

The use of rails to govern the slidable connection provides a useful linear path for that connection to follow.

In a seventh subsidiary aspect, the frame further comprises a tackle box, with an, in use, top, said top comprising a seat.

The incorporation of the tackle box into the frame, preferably in a manner wherein it is detachable from said frame, provides an advantageous means of using the tackle box. Where, as in this case the tackle box is also a seat, the incorporation of it into the frame will mean that the seat is somewhat elevated from the bank of the river, allowing the user/angler an advantageous point for fishing, and also protecting the user from mud.

Seatboxes on their own are of course known - the invention provides new and inventive means of transporting them in tandem with the rest of an angler's gear.

In an eighth subsidiary aspect, the system further comprises a plurality of handles of adjustable length, which in use may be used as levers to tilt said system about the axis of the wheel.

The provision of adjustable handles facilitates the ease of movement of the wheelbarrow system.

In a ninth subsidiary aspect, the frame is of a hollow tubular construction.

This is advantageous because it enables the weight of the wheelbarrow system to be kept down. This allows it to be moved more easily by the user.

In a tenth subsidiary aspect, the frame is of a modular construction, which may be readily assembled and disassembled.

The advantage of a modular, or flat pack, construction is that it may be broken down easily when not in use, for the purposes of manual carrying and transport.

In an eleventh subsidiary aspect, the wheelbarrow is a tackle barrow.

### Brief description of the figures

The preferred embodiments of the invention will now be described with reference to the figures, wherein;
Figure 1 is a diagrammatic side view of a wheelbarrow system of the invention, wherein the frame and the chassis are separate,
Figure 2 is a diagrammatic side view of a wheelbarrow system of the invention, wherein the frame and the chassis are connected,
Figure 3 is a diagrammatic side view of a chassis of the invention, wherein the counterbalance is in a first position,
Figure 3a is a diagrammatic side view of a chassis of the invention, wherein the counterbalance is in a second position,

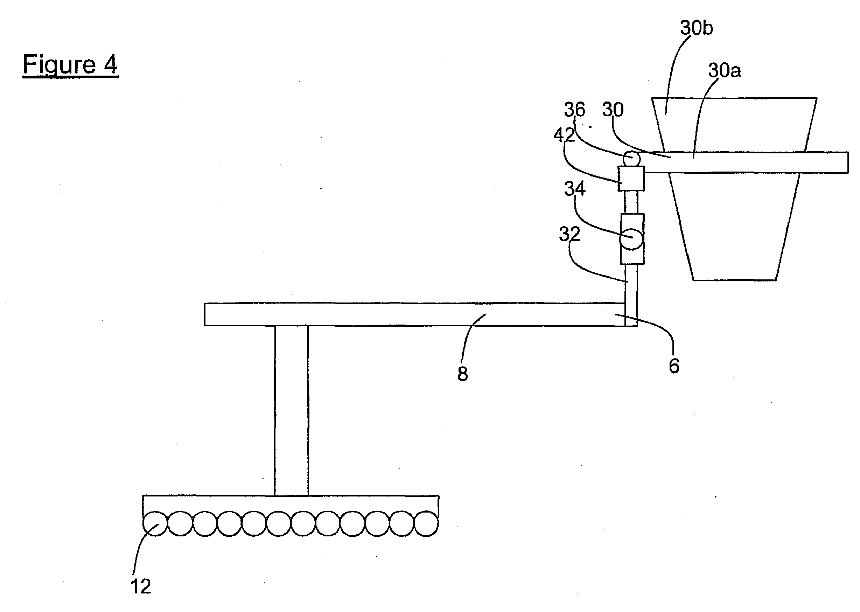

Figure 4 is a diagrammatic side view of a further embodiment of a chassis of the invention,
Figure 5 is a diagrammatic front view of a still further embodiment of a chassis of the invention, providing detail of the counterbalance, and
Figures 6 and 7 are diagrammatic side views of a further embodiment of a chassis of the invention, providing details of an adjustable wheel as defined in claim 1.

### Detailed description of the preferred embodiments

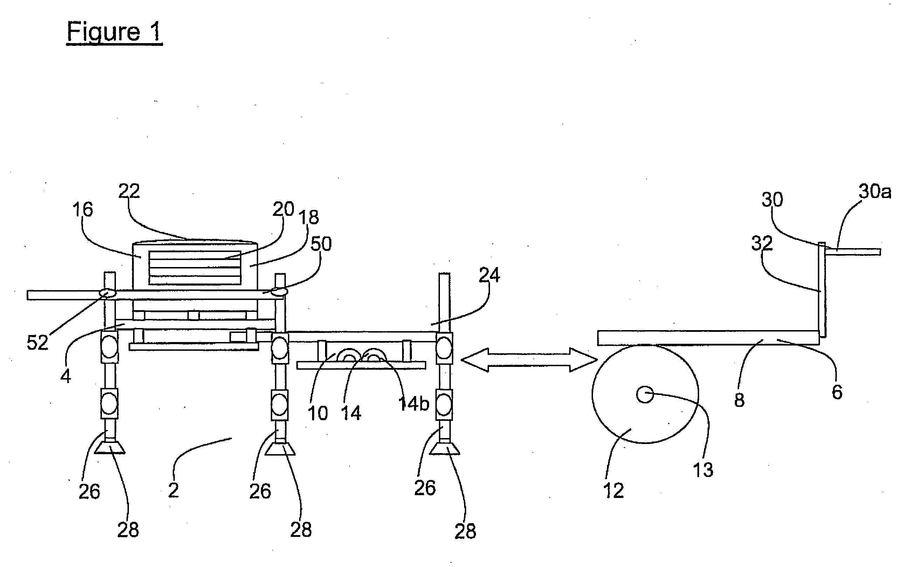

At figure 1, there is shown a wheelbarrow system of the invention 2. In its most basic embodiment, the wheelbarrow system 2 has two principal components or modules: the frame 4 and chassis 6. Both frame 4 and chassis 6 are formed of tubular steel, which is relatively light, but other metals, alloys and other materials (especially plastics and wood constructions) may be used. The wheelbarrow system is modular, which here means that components, other than the frame 4 and chassis 6 may be added or subtracted in accord with the wishes of the user. The wheelbarrow system 2 therefore has a broad appeal; the flexibility of the wheelbarrow system 2 is such that it can be adapted to fit around existing seatboxes of many different types. A version with an integrated seat-box would also be possible.

The system described in the embodiments here is essentially a "tackle barrow" -that is to say that it is designed for use by anglers, particularly competitive anglers, for the transporting of their tackle through an environment such as a river bank during occasions such as competitions. The advantages of having a tackle barrow, and even more so a tackle barrow such as this, are clear; the user / angler may transport his tackle to a given position with greater speed and efficiency than he would be able to if he had to carry it.

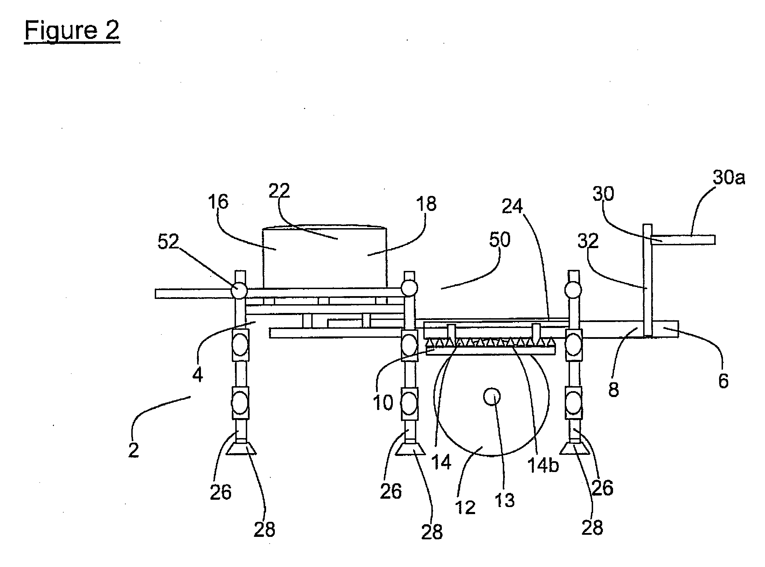

In this first embodiment, the frame 4 and chassis 6 are shown apart, separate from one another. Frame 4 and chassis 6 may however be attached to one another, by way of a slidable connection. This is shown at figure 2. The connection is formed by the collocation of wheel assembly portion 8 of chassis 6 sliding into an adjacent position to bracket means 10 of frame 4. There may be a plurality of wheel assembly portions 8 and bracket means 10, and in preferred embodiments there are two or each. Wheel assembly portions 8 and bracket means 10 are designed so as to align - in other words they are of the same gauge. The relative locations of the two portions 8, 10 may be adjusted quite finely, allowing the user control over the location of the axle 13 of the wheel 12, which acts as a pivot point, in particular relative to frame 4. This embodiment favours two wheels for balance, although a single wheel 12 is also an option. Thus the pivot point, or point of balance, is adjustable, making it easier generally for the user / angler to move the wheelbarrow system 2, and specifically to adjust the placement of the wheel 12 in order to achieve the best balance for a given load.

When the user is satisfied with the alignment of wheel assembly portion(s) 8 and bracket portion(s) 10, he may utilise locking means 14 to ensure that the collocation is secured for the purposes of moving the wheelbarrow system 2. In preferred embodiments, the locking means 14 may comprise one or more adjustable clamping members, such as adjustable bolts 14a, as shown in figure 1. One further preferred alternative is shown in figure 2, and that is a releasable ratchet mechanism 14b, which may be of ratchet or ratchet-and-pawl configuration known to the skilled man.

When the user gets into position - for example to his point at the river bank - he can detach the frame 4 and the chassis 6 from one another.

The frame 4 has several components. First, there is the seat box 16, which is in preferred embodiments made up of a chest portion 18 with multiple drawers 20 for storage of angling gear, and a seat portion 22, for a user / angler to sit on. Second, there is the footplate 24, upon which the user / angler can rest his feet. In this embodiment bracket means 10 is attached to footplate 24. In preferred embodiments, footplate 24 can be mounted on rails and/or folded or slid under seat box 16. Third, there is a plurality of adjustable legs 26, which may be shortened or lengthened to suit the terrain, or to facilitate to movement of the wheelbarrow system 2. Advantageously in this embodiment each leg terminates in a foot portion 28 -the ground engaging area of the foot is greater than there would be were the foot 28 not there, which prevents the system 2 from sinking into the ground. Optionally, the feet 28 may be jointed at the top, in order again that they might be adjusted to suit the ground on which they are attached.

In this embodiment, the legs 28 are also adapted to take handles 50. The handles are adjustable, both horizontally and vertically and may be placed, using sliding adaptors, 52 on legs of different spacing configurations; the sliding adaptors 52 slide up and down the length of handles 50. Different sizes and shapes of sliding adaptors 52 are envisaged, as is an adaptor which may itself be adjusted by the user to fit the legs of a given barrow configuration. Although handles 50 are here attached to legs 28, there is no reason why in other embodiments, said legs 28 could not be attached to other parts of the frame 4.

At figure 1, chassis 6 further comprises a counterbalance 30. The counterbalance 30 could in practice, be any item of significant mass, which may be used to help pivot the wheelbarrow system 2. It is however much preferred that counterbalance 30 is at least one of a bucket receiving means 30a (here a bucket retaining hoop) and a bucket 30b, which may be used to carry a quantity of live or ground bait. Counterbalance 30 acts as a counterbalance to the seat box 16.

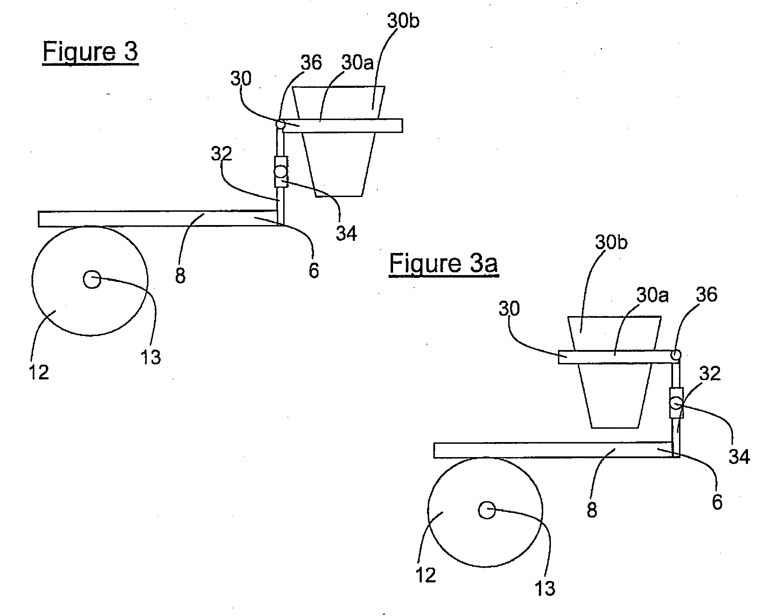

As is apparent in figure 3, counterbalance 30 is mounted on member 32. Member 32 comprises vertical adjustment means 34; if the bucket 30b is heavy, the vertical adjustment means 34 can be lowered to ensure the base of the bucket 30b is supported by the chassis 6. In this embodiment, bucket retaining hoop 30a may further be rotated from the first position of figure 3, into the second position of figure 3a, thereby lessening the weight of the counterbalance on the pivot, by bringing it closer to said pivot. This is effected through the use of rotator 36, which advantageously rotates around the axis of member 32, thus allowing rotation from the first to the second position and vice versa without spilling the contents of bucket 30b.

Thus, the frame 4 and the chassis 6 form a slidable connection underneath the footplate 24 of the frame 4. The frame 4 has the mass of the seat box 16 on one side of the chassis 6 and the counterbalance 30 on the other side of the chassis 6 whereupon the counterbalance 30 weight is increased or reduced as the chassis 6 is slid along the bracket portion 10, towards the seat box 16 and increased as the frame 4 is slid along the bracket portion 10 away from the seat box 16.

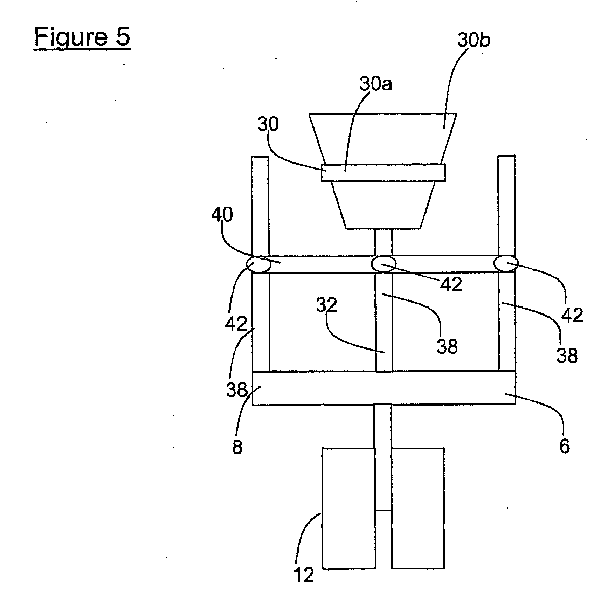

Figure 5 provides a detailed view of the end of the chassis 6 supporting the counterbalance 30. At one end of the chassis 6 are a number of vertical posts 38, preferably three, which extend, in use, upwards. A horizontal bar 40 is fitted with three adaptors 42 allowing it to slide up and down the three vertical posts 38. The adaptors 42 are fitted with bolts to fix the horizontal bar 40 in place once the desired height is achieved. The horizontal bar 40 supports the posts 38. The middle post supports a further adaptor 44 that is fitted to bucket receiving means 30a, which in this embodiment is a hoop. The further adaptor 44 is fitted with a bolt to enable it to fix the hoop 30a in the required position. The hoop 38 is so sized as to take an anglers ground bait bucket 30b.

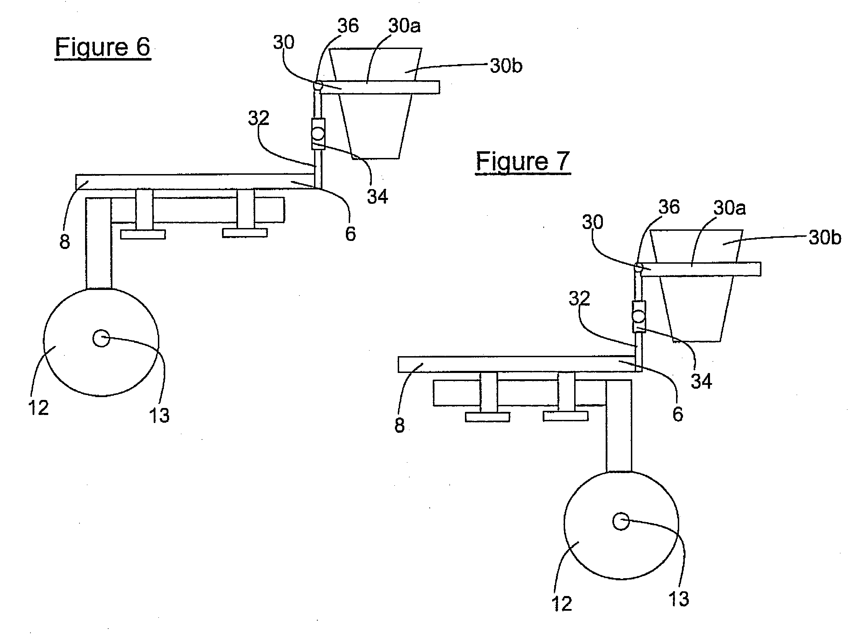

Figures 6 and 7 show details of the inventive embodiment of the chassis 6, wherein the wheel assembly portion 8 comprises an upper beam 60 with elongate portion attachment means 62, which in the embodiment shown are securing bolts, and a further elongate portion 64. This configuration allows for the attachment of the elongate portion 64 from either the counterbalance bearing end of chassis 6, as shown in figure 7, or the other end, as shown in figure 6. This provides a further means of adjusting the pivot point, supplied by axle 13.

## Claims

1. A wheelbarrow system (2) comprising a frame (4) and a chassis (6), said chassis (6) comprising at least one wheel (12) and an axle (13) of the wheel (12), which act as a pivot point for said wheelbarrow system (2), wherein the wheelbarrow system (2) further comprises means for forming a slidable connection (8,10) with said frame (4), and within which said connection the chassis (6) may be collocated relative to said frame (4) in a plurality of positions, and further may be removed from said collocation, and **characterised in that** the wheel (12) is detachably mounted on the chassis (6) by way of a wheel assembly (8), said wheel assembly (8) comprising an elongate portion being separate to both frame (4) and chassis (6), thereby allowing the independent adjustment of the position of the wheel (12) in relation to both chassis (6) and frame (4), thereby allowing the position of the pivot point to be likewise adjusted.

2. A wheelbarrow system (2) according to claim 1, wherein said chassis (6) further comprises a counterbalance (30).

3. A wheelbarrow system (2) according to claim 2, wherein said counterbalance (30) is, in use, vertically adjustable.

4. A wheelbarrow system (2) according to either of claims 2 or 3, wherein the counterbalance (30) comprises tackle bucket receiving means (30a) and / or a tackle bucket (30b).

5. A wheelbarrow system (2) according to any of the preceding claims, wherein the slidable connection (8, 10) comprises releasable locking means.

6. A wheelbarrow system (2) according to any of the preceding claims, wherein the slidable connection (8,10) comprises a releasable ratchet mechanism.

7. A wheelbarrow system (2) according to any of the preceding claims, wherein the slidable (8,10) connection comprises one or more rails (10).

8. A wheelbarrow system (2) of any of the preceding claims, wherein the frame (4) further comprises a tackle box (16), with an, in use, top, said top comprising a seat (22).

9. A wheelbarrow system (2) according to any of the preceding claims, further comprising a plurality of handles (50) of adjustable length, which in use may be used as levers to tilt said system (2) about the axis of the wheel (12).

10. A wheelbarrow system (2) according to any of the preceding claims, wherein the frame (4) is of a hollow tubular construction.

11. A wheelbarrow system (2) according to any of the preceding claims, wherein the frame (4) is of a modular construction, which may be readily assembled and disassembled.

12. A wheelbarrow system (2) according to any of the preceding claims, wherein the wheelbarrow (2) is a tackle barrow.

## Patentansprüche

1. Schubkarrensystem (2), umfassend einen Rahmen (4) und ein Fahrgestell (6), das Fahrgestell (6) umfassend mindestens ein Rad (12) und eine Achse (13) des Rades (12), die als Schwenkpunkt für das Schubkarrensystem (2) agiert, wobei das Schubkarrensystem (2) des Weiteren Mittel zur Bildung einer verschiebbaren Verbindung (8, 10) mit dem Rahmen (4) umfasst und das Fahrgestell (6) innerhalb dieser Verbindung im Verhältnis zu dem Rahmen (4) in einer Mehrzahl von Positionen angeordnet werden kann und des Weiteren aus dieser Anordnung entfernt werden kann, und **dadurch gekennzeichnet, dass** das Rad (12) mithilfe einer Radbaugruppe (8) abnehmbar an dem Fahrgestell (6) befestigt ist, wobei die Radbaugruppe (8) einen langen Abschnitt umfasst, der sowohl von dem Rahmen (4) als auch von dem Fahrgestell (6) getrennt ist, wodurch die unabhängige Verstellung der Position des Rades (12) im Verhältnis zu sowohl dem Fahrgestell (6) als auch dem Rahmen (4) ermöglicht wird, wodurch in gleicher Weise die Position des Schwenkpunktes verstellt werden kann.

2. Schubkarrensystem (2) gemäß Anspruch 1, wobei das Fahrgestell (6) des Weiteren ein Gegengewicht (30) umfasst.

3. Schubkarrensystem (2) gemäß Anspruch 2, wobei das Gegengewicht (30) im Gebrauch vertikal verstellbar ist.

4. Schubkarrensystem (2) gemäß einem der Ansprüche 2 oder 3, wobei das Gegengewicht (30) Mittel zum Aufnehmen eines Ausrüstungsbehälters (30a) und/oder einen Ausrüstungsbehälter (30b) umfasst.

5. Schubkarrensystem (2) gemäß einem der vorherigen Ansprüche, wobei die verschiebbare Verbindung (8, 10) lösbare Verriegelungsmittel umfasst.

6. Schubkarrensystem (2) gemäß einem der vorherigen Ansprüche, wobei die verschiebbare Verbindung (8, 10) einen lösbaren Sperrklinkenmechanismus umfasst.

7. Schubkarrensystem (2) gemäß einem der vorherigen Ansprüche, wobei die verschiebbare Verbindung (8, 10) eine oder mehrere Schienen (10) umfasst.

8. Schubkarrensystem (2) gemäß einem der vorherigen Ansprüche, wobei der Rahmen (4) des Weiteren einen Ausrüstungsbehälter (16) mit einer, im Gebrauch, Oberseite umfasst, wobei die Oberseite einen Sitz (22) umfasst.

9. Schubkarrensystem (2) gemäß einem der vorherigen Ansprüche, des Weiteren umfassend eine Mehrzahl von Handgriffen (50) mit verstellbarer Länge, die im Gebrauch als Hebel zum Schwenken des Systems (2) um die Achse des Rades (12) verwendet werden können.

10. Schubkarrensystem (2) gemäß einem der vorherigen Ansprüche, wobei der Rahmen (4) aus einer Hohlprofilkonstruktion besteht.

11. Schubkarrensystem (2) gemäß einem der vorherigen Ansprüche, wobei der Rahmen (4) aus einer modularen Konstruktion besteht, die sich einfach montieren und demontieren lässt.

12. Schubkarrensystem (2) gemäß einem der vorherigen Ansprüche, wobei es sich bei der Schubkarre (2) um eine Ausrüstungskarre handelt.

## Revendications

1. Un système de brouette (2) comprenant un cadre (4) et un châssis (6), ledit châssis (6) comprenant au moins une roue (12) et un axe (13) de la roue (12), qui fait office de point de pivot pour ledit système de brouette (2), le système de brouette (2) comprenant en outre un moyen pour former un raccord coulissant (8, 10) avec ledit cadre (4), et le châssis (6) pouvant être à l'intérieur dudit raccord en collocation relativement audit cadre (4) dans une pluralité de positions, et pouvant en outre être retiré de ladite collocation, et **caractérisé en ce que** la roue (12) est montée de façon détachable sur le châssis (6) au moyen d'un assemblage de roue (8), ledit assemblage de roue comprenant une portion allongée qui est distincte à la fois du cadre (4) et du châssis (6), permettant ainsi le réglage indépendant de la position de la roue (12) par rapport à la fois au châssis (6) et au cadre (4), permettant ainsi à la position du point de pivot d'être réglée de façon analogue.

2. Un système de brouette (2) selon la revendication 1, ledit châssis (6) comprenant en outre un contrepoids (30).

3. Un système de brouette (2) selon la revendication 2, ledit contrepoids (30) étant, lors de l'utilisation, réglable verticalement.

4. Un système de brouette (2) selon l'une quelconque des revendications 2 et 3, le contrepoids (30) comprenant un moyen de réception de seau de pêche (30a) et/ou un seau de pêche (30b).

5. Un système de brouette (2) selon n'importe lesquelles des revendications précédentes, le raccord coulissant (8, 10) comprenant un moyen de verrouillage libérable.

6. Un système de brouette (2) selon n'importe lesquelles des revendications précédentes, le raccord coulissant (8, 10) comprenant un mécanisme d'encliquetage libérable.

7. Un système de brouette (2) selon n'importe lesquelles des revendications précédentes, le raccord coulissant (8, 10) comprenant un ou plusieurs rails (10).

8. Un système de brouette (2) de n'importe lesquelles des revendications précédentes, le cadre (4) comprenant en outre un coffre de pêche (16), avec un, lors de l'utilisation, dessus, ledit dessus comprenant un siège (22).

9. Un système de brouette (2) selon n'importe lesquelles des revendications précédentes, comprenant en outre une pluralité de poignées (50) de longueur réglable, qui lors de l'utilisation peuvent être utilisées comme leviers pour incliner ledit système (2) sur l'axe de la roue (12).

10. Un système de brouette (2) selon n'importe lesquelles des revendications précédentes, le cadre (4) étant en une construction tubulaire creuse.

11. Un système de brouette (2) selon n'importe lesquelles des revendications précédentes, le cadre (4) étant en une construction modulaire, qui peut être facilement assemblée et désassemblée.

12. Un système de brouette (2) selon n'importe lesquelles des revendications précédentes, la brouette (2) étant une brouette de pêche.
